# EUROPEAN PATENT APPLICATION

(11) **EP 3 933 734 A1**
(43) Date of publication of application: **05.01.2022**
(21) Application number: 20183058.5
(22) Date of filing: 30.06.2020
(51) Int. Cl.: G06Q 20/32, G06Q 20/40, G06Q 20/38, G06Q 20/22

(54) **CRYPOGRAM GENERATION FOR A DEVICE TOKEN LINKED TO MULTIPLE CREDENTIALS**

(71) Applicant: Mastercard International Incorporated, Purchase NY 10577 (US)
(72) Inventor: TIERNEY, John, Wirral Merseyside CH60 7TF (GB); Noë, James Christian, West Wickham BR4 0BL (GB); COWEN, Michael John, London W2 3DW (GB)
(74) Representative: Gill Jennings & Every LLP

(57) **Abstract**

The invention provides a technique in which payment credentials, e.g. a cryptogram, can be generated remotely and in real time at a point of sale terminal whilst a transaction is ongoing. A mobile device communicates with the point of sale terminal to obtain transaction data and transmits this along with a unique identifier to a remote server in a payment credential generation request. The remote server generates a payment credential based on the unique identifier and transmits the generated payment credential to the mobile device. The mobile device in turn transmits the payment credential to the point of sale terminal, to allow the payment credential to be used in onward processing of the transaction. This technique enables a user to effect payment with a funding account that is not associated with the payment instrument presented at the point of sale terminal.

## Description

### FIELD OF INVENTION

The invention relates generally to the generation and processing of authorisation data associated with transaction data, and more particularly to the generation and processing of authorisation data where the recipient of the transaction data is dynamically selectable by a user.

### BACKGROUND

There is an increasing demand for users to be able to link multiple funding sources with a single payment card or payment token, whereby the user can select, or configure rules for selecting, a funding account for use for a given transaction either before or during the transaction.

This has the benefit of allowing users to reduce the number of payment cards they need to carry with them or store in a digital wallet, and also allows users to fund a purchase using a funding account that may otherwise not be accepted by a given merchant.

As the payment card or payment token is provided by a single primary issuer, having multiple funding accounts associated with the payment card or payment token additionally provides a way to link transactions funded by different issuers, thereby enabling information from such transactions to be collated by the primary issuer.

However, implementing such a payment mechanism is technically challenging. Issuers typically verify the origin and integrity of a transaction authorization request based, at least in part, on cryptographic information shared between a payment device and the issuer. However, in methods where initial transaction request is based on details of a primary issuer, it is not generally possible for a secondary issuer to verify the integrity and origin of the data. This is because the secondary issuer does not have access to the necessary cryptographic information, e.g. cryptographic keys, to verify a cryptogram generated according to the specifications of the primary issuer.

Thus, additional technical problems arise in authenticating and verifying such payments, as the cryptogram associated with the payment card or payment token will generally be different to the cryptogram associated with the funding account.

### SUMMARY OF THE INVENTION

The invention provides a technique in which payment credentials, e.g. a cryptogram, can be generated remotely and in real time at a point of sale terminal whilst a transaction is ongoing. A mobile device communicates with the point of sale terminal to obtain transaction data and transmits this along with a unique identifier to a remote server in a payment credential generation request. The remote server generates a payment credential based on the unique identifier and transmits the generated payment credential to the mobile device. The mobile device in turn transmits the payment credential to the point of sale terminal, to allow the payment credential to be used in onward processing of the transaction. This technique enables a user to effect payment with a funding account that is not associated with the payment instrument presented at the point of sale terminal.

In a first aspect, the invention provides a computer-implemented cryptographic authorization method performed at a server of a transaction processing system, comprising: receiving, from a mobile communication device via a wireless data connection, a request for an authorization cryptogram associated with a preferred payment credential, PPAN, wherein the request for an authorization cryptogram comprises transaction details; retrieving, from a secure cryptographic key storage element, a cryptographic key associated with an issuer associated with the PPAN; generating, using the cryptographic key, an authorization cryptogram based on the transaction details; sending, to the mobile communication device via the wireless data connection, the authorization cryptogram; receiving an initial authorization request message, the initial authorization request message comprising the transaction details, the authorization cryptogram and a device credential token, DPAN; sending, to an issuer associated with the PPAN, an updated authorization request message based on the initial authorization request message, wherein the updated authorization request message comprises the PPAN in place of the DPAN.

In some embodiments, the method further comprises: accessing a tokenization service and retrieving a main payment credential, FPAN, associated with the DPAN; accessing a credential selection database and determining based on a data indication in the credential selection database that the PPAN should be used as the payment credential in transactions comprising the FPAN.

In some embodiments, the initial authorization request message comprises a data field containing an encrypted version of the PPAN.

In some embodiments, the request for an authorization cryptogram comprises one or more authentication credentials, wherein the one or more authentication credential comprises any combination of: a PIN entered into the mobile communication device, a password entered into the mobile communication device, biometric information provided into the mobile communication device and a device cryptogram generated using a cryptographic key associated with the device, and wherein the method further comprises: verifying the identity of the user and/or the device based on the authentication credentials.

In some embodiments, the transaction details comprise data provided by a POS terminal during a contactless transaction.

In some embodiments, the transaction details comprise dynamic data generated by the mobile communication device during a transaction.

In some embodiments, the cryptographic key is an issuer master key associated with the issuer of the PPAN, and wherein generating the authorization cryptogram comprises: deriving a card master key based on the issuer master key and the PPAN, and deriving a session key from the card master key.

In a second aspect, the invention provides a computer-implemented cryptographic authorization method performed by a mobile communication device, the method comprising: initiating processing of a payment transaction at a merchant point of sale, POS, terminal; receiving transaction details from the merchant POS terminal via a wireless communication; sending a request for an authorization cryptogram to a server of a transaction processing system via a wireless data connection, the request comprising the transaction details received from the merchant POS terminal; receiving the authorization cryptogram from the server of the transaction processing server via a wireless data connection; providing the authorization cryptogram and a device credential token associated with the mobile payment device to the merchant POS terminal via the wireless communication for inclusion in an authorization request message.

In some embodiments, the request for the authorization cryptogram comprises further transaction details generated by the mobile communication device during the transaction, and wherein the method further comprises providing the further transaction details to the merchant POS terminal via an NFC communication.

In some embodiments, the method further comprises: requesting, from a tokenization service provider, a device credential token, DPAN linked to a main payment credential, FPAN, provided to the tokenization service provider.

In some embodiments, the method further comprises: transmitting a request to a remote credential selection database, the request requesting that the credential selection database is updated to include an indication that transactions associated with the FPAN should be directed towards an account associated with a preferred payment credential, PPAN.

In some embodiments, the further transaction details provided to the merchant POS terminal comprises a data field containing an encrypted version of the PPAN.

In some embodiments, the method further comprises: receiving an authentication credential from a user, wherein the authentication credential comprises one of a PIN entered into the mobile communication device, a password entered into the mobile communication device, or biometric information provided into the mobile communication device.

In a third aspect, the invention provides a data processing server comprising a processor and a memory, the data processing server configured to perform the steps of any of the embodiments of the first aspect.

In a fourth aspect, the invention provides a wireless communication element, a processor and a memory, the mobile communication device configured to perform steps of any embodiment of the second aspect.

In a fifth aspect, the invention provides a computer-readable storage medium comprising computer-executable instructions stored thereon which, when executed by a processor, cause the processor to perform the method of any embodiment of the first or second aspects.

### BRIEF DESCRIPTION OF THE DRAWINGS

Embodiments of the present invention are described below, by way of example only, with reference to the accompanying drawings, in which:
Figure 1 illustrates in schematic form a system and environment suitable for implementing aspects of the invention;
Figure 2 is a flow diagram setting out a method performed by a mobile communication device according to an embodiment;
Figure 3 is a flow diagram setting out a method performed by a server of a transaction processing system according to an embodiment;
Figure 4 illustrates in schematic form the relationship between various credentials stored in the credential selection server.
Figure 5 is a schematic diagram of a mobile communication device suitable for use in some embodiments.
Figure 6 shows in schematic form a data processing device suitable for performing various aspects of the disclosure.

### DETAILED DESCRIPTION

In the following description aspects of the invention are at times described in the context of electronic payments. It will be appreciated however that the invention has application in contexts outside of electronic payments, specifically to any environment in which electronic communications where certainty around the identity of the transmitting party is desirable are sent to a number of potential receivers.

The present invention relates to methods and systems in which authentication cryptograms and payment credential tokenization are used to improve the security of electronic data communications relating to electronic payments. In the embodiments described below, a payment transaction is initiated by a user using a mobile communication device associated with a device payment token, DPAN. The user also selects, using a mobile application executing on the mobile communication device, secondary payment credentials to be used during the transaction. During processing of the transaction, which may be a contactless transaction, the mobile communication device sends transaction details to a payment network provider and requests remote generation of a cryptogram associated with the secondary payment credentials. This cryptogram can be used to validate the secondary payment credentials.

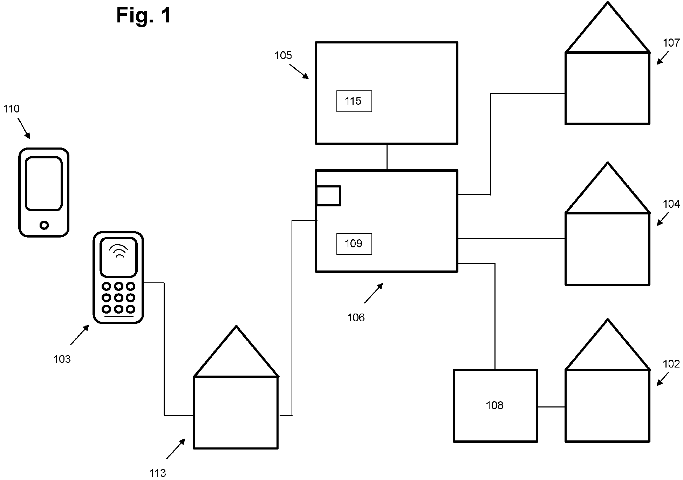

Figure 1 shows an exemplary example of a system and environment for use in some embodiments of the present invention.

A mobile communication device 110 is suitable for initiating payment transactions, e.g. contactless transactions using a wireless antenna such as a near field communication (NFC) antenna. A user of a mobile communication device 110 has access to payment accounts at a number of different issuers 102, 104, 107 and has been provided with payment credentials, funding primary account numbers (FPANs), from the different issuers 102, 104, 107.

The FPANs may be used in transaction authorization messages to identify the issuer 102 and the account at the issuer from which payment should be made. Transactions using the FPANs may be made according to the four party payment model, in which the transfer of goods or services between a consumer and a merchant are accompanied by a chain of authorization messages passed between an acquirer 113 associated with the merchant and an issuer associated with the consumer. In particular, an authorization request message comprising the FPAN can be sent from a merchant POS terminal 103 to a server of an acquiring institution 113, from the acquiring institution server 113 to a server 106 of a transaction processing network, and from the server 106 of the transaction processing network to a server of the issuer 102. If the issuer authorizes the transaction, an authorization response is sent back down the same chain to confirm to the merchant that a payment will be made, upon which confirmation the merchant may release goods to the consumer.

The payment credentials used to authorize transactions are often the target of malicious parties who attempt to obtain the credentials in order to initiate fraudulent transactions. In order to protect sensitive payment credentials, a payment token, DPAN, may be used during transactions in place of the FPAN. The DPAN acts as a surrogate payment credential to the FPAN, but may have a number of limitations applied to it that are not applied to the FPAN. For example, the payment processing network or tokenization service provider 108 may have rules that specify that the DPAN may only be used at certain merchants, or from transactions originating from certain devices, or for a limited time or number of transactions. The limitations placed on the DPAN mean that their utility in committing fraud is significantly reduced compared to the FPAN should a malicious party gain access to the DPAN.

A tokenization service provider 108, such as the Mastercard Digital Enablement Service (MDES), may be responsible for provisioning payment tokens. When a user registers a payment credential (FPAN) to the mobile communication device 110, the tokenization service provider 108 generates a DPAN which is provided to the device 110 and stored on the device 110 instead of the FPAN. The tokenization service provider 108 is capable of mapping the DPAN to the FPAN so as to be able to retrieve the FPAN based on the DPAN when necessary. The tokenization service provider 108 may, for example, manage a database comprising a lookup table in which the underlying FPAN is indicated in relation to the DPAN. Alternatively, the DPAN may be an encrypted version of the FPAN, which the tokenization server 108 is able to decrypt to retrieve the original FPAN.

During a four party payment transaction, the DPAN may be used in an authorization message at the initiation of the transaction. During normal transactions, the DPAN may be included in an authorization request message, which is passed from the mobile communication device 110 to a merchant POS terminal 103 to a server of an acquiring institution 113 associated with the merchant. The acquiring institution 113 processes the authorization request and forwards the authorization request to the transaction processing network server 106 for further processing. When the transaction processing network server 106 receives the authorization request, the transaction processing network server 106 may request that the tokenization service provider 108 replaces the DPAN with the linked FPAN. The transaction processing network server 106 may then update the authorization request to include the FPAN rather than the DPAN for sending on to the issuer server.

In embodiments of the present disclosure, the DPAN and FPAN are associated with further payment credentials (hereafter "secondary payment credentials") in addition to the FPAN of the main issuer 102 associated with the DPAN by the tokenization service provider 108. The secondary payment credentials may be associated with secondary issuers 104, 107 that do not have a relationship with the tokenization service provider 108. Instead, the association of the DPAN with the secondary payment credentials is managed by the server 106 of the transaction system.

In some embodiments, the payment network provider operates a payment credentials selection server 105 comprising a payment credentials selection database 115. The mobile communication device 110 has stored on its internal memory a mobile application which a user may use to make a selection of payment credentials associated with a secondary issuer 104 to which payments initiated using the DPAN should be directed. The mobile application stores a selection of a preferred secondary credential on a credential selection database 115 stored on a remote credential selection server 105.

The DPAN or main FPAN may act as default payment credentials to be used where no selection of secondary payment credentials has been made. The selection of a preferred secondary credential be made by the explicit choice of a set of a payment credentials from the user. In some examples, the user may indicate criteria which the data processing server 106 may use to make a selection of a preferred payment credential. For example, the user may indicate that a payment credential associated with a particular currency is used, or that a payment credential associated with an account having at least a specified amount of funds is used. In general, the user may provide criteria allowing the data processing server 106 to make a preferred credential selection based on transaction data, such as amount, currency, merchant country, merchant name etc. A set of rules may be defined that capture these requirements and enable a preferred payment credential to be selected dynamically.

The credential selection database 105 may comprise a lookup table in which a secondary payment credential or identifier, such as a PAN (hereafter "preferred PAN" or PPAN), for a preferred account at a secondary issuer 104 is associated with the main payment credential, which may be the main FPAN or the DPAN associated with the mobile communication device 101. The user may communicate with the credential selection server 105 via the mobile application, e.g. over a 3G, 4G, 5G or WiFi channel, and update the preferred account by replacing the PPAN associated with the main FPAN or DPAN with a PPAN for a different account. Alternatively, the lookup table may comprise details of a number of different PPANs, each associated with a different tag. The tag could be provided as part of an authorization method in order to indicate to the transaction processing server 106 which PPAN associated with the FPAN in the credential selection database 115 has been selected. When the transaction processing server 106 receives an authorization request comprising the DPAN or FPAN, the transaction processing server 106 accesses the credential selection database 115 to determine the user selection of the preferred PPAN to be used in the transaction. The PPAN is included in an updated authorization request to be sent to a server of the secondary issuer 104, where the secondary issuer 104 is associated with the PPAN.

The user may provide the data processing server with criteria for making a payment credential selection, based on which the data processing server may make additions or modifications to the credential selection database 105. The data processing server 106 may then make a selection of the preferred credential based on one or more rules generated based on the criteria supplied by the user. The one or more rules may be dynamic in that they are based on information included in transaction details. For example, the user may specify to the data processing server 106 that a secondary credit card should be used in preference to the default debit card in transactions with an amount that is above a certain threshold. Upon receiving a transaction request for an amount above the threshold amount, the data processing server 106 may then update the credential selection database 105 to indicate that a secondary payment credential associated with a credit card should be the preferred payment credential in this transaction.

In some examples, instead of using a credential selection database 105 to determine the preferred payment credential, an encrypted version of the PPAN is provided in a data field of the authorization message. The transaction processing server 106 is able to extract the encrypted PPAN and decrypt it to identify the PPAN, which is then included in the updated authorization request for sending to the secondary issuer 104.

In addition to credential tokenization, another security feature that may be used in payment transactions is the inclusion in the authorization request of cryptographic data that can be used to confirm the origin and integrity of the data in the authorization request. Payment devices, such as integrated circuit cards (ICCs) or contactless payment enabled mobile communication devices 110 have cryptographic capabilities allowing the card issuer to verify the integrity and origin of messages using cryptograms generated using cryptographic keys. Some mobile communications devices 110 are capable of communication with remote cryptographic servers in order to obtain cryptographic tools for use in a particular transaction. A cryptographic tool, such as one key of a symmetric key pair shared with an issuer 102, may be used by the payment device to generate a cryptogram relating to transaction details, such as the FPAN, transaction amount, merchant name, etc. An authorization request message may comprise the transaction details followed by the cryptogram. By verifying that the cryptogram was generated using the transaction details, the issuer 102 can verify that the transaction details have not been altered.

When a tokenized payment credential is used in a payment transaction, the transactions in the authorization request may be altered as a result of the detokenization process between the initiation of the transaction and the issuer 102 receiving the authorization request. The tokenization service provider 108 has a trusted relationship with the issuer 102 of the FPAN. The tokenization service 108 is able to validate the authorization request cryptogram on behalf of the issuer 102 before detokenizing the payment credentials for sending to the issuer 102.

Because the secondary issuers 104, 107 are not necessarily registered to the tokenization service provider 108, the tokenization service provider 108 is not generally able to validate the cryptogram provided with authorization request on behalf of a secondary issuer 104.

In examples of the present invention, the mobile communication device 110 used to initiate a transaction request obtains a remotely generated cryptogram corresponding to the PPAN from the transaction processing server 106 during processing of the transaction at a merchant point of sale (POS). The mobile communication device 110 uses a wireless data connection (3G, 4G, 5G, WiFi, etc.) to provide the transaction processing server 106 with transaction details, such as any combination of a payment amount, the merchant name, an Unpredictable Number generated by the merchant POS terminal 113, and an ATC number generated by the mobile communication device 110.

The mobile communication device 110 preferably comprises means for generating authentication data that can be used by transaction processing server 106 to authenticate the device 110 and preferably also the user. The mobile communication device 110 can provide authentication data to the data processing server 106 when requesting a remotely generated cryptogram. Before generating the cryptogram, the data processing server 106 preferably verifies that that the device 110 is a valid device, and more preferably also verifies that the user has authenticated the request. In the event the device 110 and optionally also the user are authenticated successfully, data processing server 106 provides the requested cryptogram.

In order to provide user-related authentication data, the mobile communication device 110 may comprise a biometric data input sensor, such as a fingerprint sensor, which is capable of receiving biometric data from a user. In order to provide device-related authentication data, the mobile communication device 110 may comprise cryptographic keys or means for deriving cryptographic keys that can be used to generate cryptographic information for verification by the data processing server 106. A mechanism that combines the two could also be provided - for example, a PIN is entered by a user and provided to the data processing server 106. This PIN may also be used to derive a cryptographic key that is used to generate a cryptogram for validation by the data processing server 106.

The transaction processing server 106 has access to a secure data storage element 109, which may form part of the transaction processing server 106. The secure data storage element 109 includes a number of cryptographic tools associated with the respective secondary issuers 104, 107 associated with PPANs. The cryptographic tools associated by the secondary issuers 104, 107 may be cryptographic keys corresponding to cryptographic keys stored at the issuer servers. A cryptographic key could be a symmetric key paired with a symmetric key stored on a secondary issuer server 104. The cryptographic key could be an asymmetric key paired with an asymmetric key stored on the secondary issuer server 104. The cryptographic key could be an issuer master key shared with the secondary issuer 104 that can be used to derive a card master key and session keys.

The transaction processing server 106 generates a cryptogram based on the transaction details provided by mobile communication device and the PPAN using a cryptographic tool in accordance with a specification for generating cryptograms, such as specified in EMV^{®} contactless payment specification. This may be formed, for example, by hashing the transaction details (with the PPAN used instead of the DPAN) using a hashing function and encrypting the output with a cryptographic key derived from an issuer master key associated with the secondary issuer 104 of the PPAN.

The transaction processing server 106 returns the cryptogram to the mobile communication device 110 via the wireless data connection. Preferably, a secure channel is used. The cryptogram may itself be encrypted using an asymmetric key pair when sent back to the mobile communication device 110.

The mobile communication device 110 transmits the cryptogram to the merchant POS terminal 103 using a wireless channel established with a wireless antenna of the mobile communication device 110, e.g. a NFC antenna. The mobile communication device may also transmit any further transaction details that were provided to the transaction processing network 106 for use in generating the cryptogram. The mobile communication device 110 also transmits the DPAN to the merchant POS terminal as a payment credential.

The mobile communication device 110 may transmit digitally signed certificates and an asymmetric key associated with the DPAN and the main issuer in order to allow the POS terminal 103 to perform Offline Data Authentication in accordance with EMV^{®} specifications.

The merchant POS terminal generates an initial authorization request message comprising the cryptogram it received from mobile communication device 110, transaction details and the DPAN. The authorization request message may be generated in accordance with a standard for payment network communications, such as an ISO 8583 message comprising EMV^{®} data. The cryptogram at this stage cannot verify the integrity of the initial authorization request message because the initial authorization request message comprises the DPAN rather than the PPAN that was used to generate the cryptogram provided by the mobile communication device 110.

The merchant POS terminal 103 sends the initial authorization request message to the acquirer 113, which sends the initial authorization request message to the transaction processing network 106. The transaction processing network 106 updates the authorization request message to replace the DPAN with the PPAN used to generate the cryptogram. The authorization request message is then sent to the secondary issuer 104 associated with the PPAN. The secondary issuer 104 is now able to validate the cryptogram using a cryptographic tool to verify the integrity of the authorization request message because the cryptogram corresponds to the PPAN, not the DPAN.

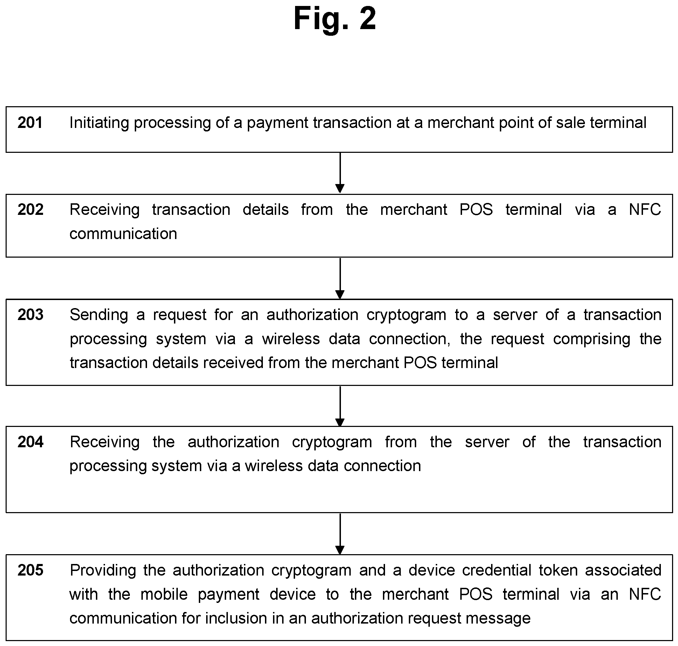

Figure 2 describes steps that are performed by the mobile communication device 110 during embodiments of the disclosure.

Step 201. The mobile communication device 110 initiates processing of a payment transaction at a merchant POS 103. This may include bringing the mobile communication device 110 into the vicinity of an NFC enabled merchant POS terminal 103 where a merchant has entered transaction details into the merchant POS terminal for a sale. The payment may be initiated in accordance to known specifications for contactless payment transaction, such as protocols provided in EMV^{®} contactless payment specification.

Step 202. The mobile communication device 110 receives transaction details from the merchant POS terminal 103 via a NFC communication between an NFC element of the merchant POS 103 and an NFC communication element of the mobile communication device 110. The transaction details may comprise any combination of a transaction amount, a merchant name, an Unpredictable Number, a transaction type indicating that the transaction is a contactless transaction made face-to-face at a POS terminal, a transaction date and other transaction details specified in EMV^{®} contactless payment specification.

Step 203. The mobile communication device 110 sends a request for an authorization cryptogram to a server 106 of a transaction processing system via a wireless data connection, the request comprising the transaction details received from the merchant POS terminal.

The wireless data communication may be a 3G, 4G or 5G data connection, a WiFi connection, or another wireless communication protocol suitable for providing data to a remote location. The transaction details may be encrypted before being sent to the transaction processing server 106.

The transaction details sent to the transaction processing server 106 can include transaction details generated by the mobile communication device 110, such as an application transaction counter, ATC, number. Furthermore, the request for an authorization cryptogram may comprise the DPAN, the FPAN or the PPAN. The payment credential can be used by the transaction processing server 106 to determine the preferred issuer for the transaction in order to generate a cryptogram that may be verified by the preferred issuer.

In some examples, the mobile payment device may receive authentication data from the user, such as a PIN or biometric data, such as a fingerprint data. The authentication data may be provided to the transaction processing server and may be used to generate the authorization cryptogram. For example, a PIN may be used to derive a cryptographic key from a cryptographic master key for use in generating the authorization cryptogram.

Step 204. The mobile communication device 110 receives the authorization cryptogram from the transaction processing server via a wireless data connection. The wireless data communication may be a 3G, 4G or 5G data connection, a WiFi connection or another wireless communication protocol suitable for providing data to a remote location, and the authorization cryptogram may be encrypted with a public key associated with the mobile communication device 110 or a symmetric cryptographic key known to both the mobile communication device 110 and the transaction processing server 106.

Step 205. The mobile communication device 110 provides the authorization cryptogram and the DPAN associated with the mobile payment device 110 to the merchant POS terminal 103 via an NFC communication for inclusion in an authorization request message. The mobile communication device 110 also provides to the merchant POS terminal any further transaction details used to generate the authorization cryptogram, such as an ATC number.

The mobile communication device may also provide further details to the merchant POS terminal including an encrypted version of the PPAN that may be decrypted by the transaction processing server 106. In this example, the transaction processing server 106 determines the PPAN by extracting the encrypted PPAN from the authorization message and decrypting the encrypted PPAN.

The mobile communication device 110 may provide digitally signed digitally signed certificates and an asymmetric key associated with the DPAN and the main issuer in order to allow the POS terminal 103 to perform Offline Data Authentication in accordance with EMV^{®} specifications.

Prior to performing the above steps, the mobile communication device 110 may perform steps in order to request a token device credential, DPAN. For example, the mobile communication device 110 may send an encrypted copy of the FPAN (i.e., the main payment credential that is associated with the DPAN and a main payment account, but not necessarily the PPAN) and request a device credential token. The mobile communication device 110 may then receive a DPAN via an encrypted communication.

The mobile communication device 110, prior to initiating the transaction, may also be used to store, either on internal memory of the mobile communication device 110 or at a remote credential selection server 105, a preference of a preferred credential, PPAN, to be used for transactions initiated with the DPAN or FPAN associated with the DPAN.

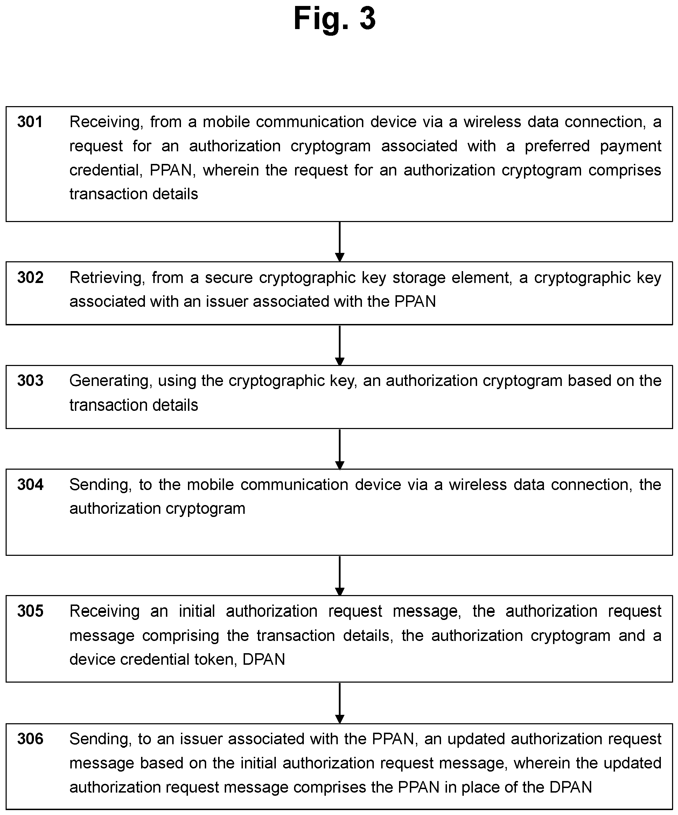

Figure 3 describes steps that are performed by the server 106 of the transaction processing system during embodiments of the disclosure.

Step 301. The transaction processing server receives, from the mobile communication device 110 via a wireless data connection, a request for an authorization cryptogram associated with a preferred payment credential, PPAN, wherein the request for an authorization cryptogram comprises transaction details.

The wireless data communication may be a 3G, 4G or 5G data connection, a WiFi connection or another wireless communication protocol suitable for providing data to a remote location. The transaction details may be encrypted before being sent to the transaction processing server 106.

The transaction details sent to the transaction processing server 106 can include transaction details generated by the mobile communication device 110, such as an ATC number. Furthermore, the request for an authorization cryptogram may comprise the DPAN, the FPAN or the PPAN. The payment credential can be used by the transaction processing server 106 to determine the preferred issuer for the transaction in order to generate a cryptogram that may be verified by the preferred issuer.

In some cases, the mobile payment device may receive authentication data from the user, such as a PIN or biometric data, such as fingerprint data. The authentication data may be provided to the transaction processing server and may be used to generate the authorization cryptogram. For example, a PIN may be used to derive a cryptographic key from a cryptographic master key for use in generating the authorization cryptogram.

The transaction processing server 106 may require the authentication data from device 110 before generating an authorization cryptogram. Step 301 may also include the transaction processing server 106 receiving authentication data relating to device 110 and optionally also the user. The transaction processing server 106 may verify the authorization data to authenticate the device 110 and optionally also the user before generating an authorization cryptogram. Verifying the authentication data may include verifying that a cryptogram received from device 110 was generated using a cryptographic key securely stored on the mobile communication device 110, so as to verify the identity of device 110. Where authentication data relating to the user is also provided, authenticating may also include determining that biometric data or a PIN provided by the device 110 corresponds to stored authorization data associated with the user in a database of the transaction processing server 106.

Step 302. The transaction processing server 106 retrieves, from a secure cryptographic key storage element 109, a cryptographic key associated with an issuer associated with the PPAN.

The transaction processing server 106 may determine which issuer the preferred issuer is by determining which payment credential is indicated as the preferred payment credential associated with the FPAN or DPAN in the credential selection server 105. The preferred payment credential may have been specified previously by the user, e.g. using a software application or via a web-based interface provided by a browser application, or the credential selection server 105 may have access to one or more user-configurable rules that enable the preferred payment credential to be determined.

For example, the rules may specify that a default payment credential that is to be used for all transactions until such time as this default payment credential is updated by the user. Alternatively, the rules may make use of transaction data such as any one or more of transaction amount, currency of transaction, merchant location, merchant name, etc. to dynamically select a preferred payment credential for a given transaction.

The credential selection server 105 may thus select the preferred payment credential based on the one or more rules, perhaps from a set of available payment credentials that could each potentially serve as the preferred payment credential for a given transaction.

The invention is not limited by any particular rule or set of rules and suitable rules will be devisable by the skilled person having the benefit of the present disclosure and given the specifics of a situation at hand. The one or more rules may be associated with a particular user, e.g. associated with an account in the name of the user. The user may be able to view at least some of the rules associated with their account and update the rules as they wish.

Step 303. The transaction processing server 106 generates, using the cryptographic key, an authorization cryptogram based on the transaction details. The generation of the cryptogram may be performed based on known cryptographic protocols. The authorization cryptogram may be formed by hashing the transaction details using a hashing function and encrypting the output with the cryptographic tool or a cryptographic tool derived from the cryptographic tool. The authorization cryptogram may be generated using be a single use key derived from a card master key associated with the main issuer and dynamic data relating to the transaction. The card master key may be derived from an issuer master key and the PPAN.

Step 304. The transaction processing server 106 sends the generated authorization cryptogram to the mobile communication device 110 via a wireless data connection. The authorization cryptogram may be encrypted with a public key of the mobile communication device 110 before being sent to the mobile communication device 110.

Step 305. The transaction processing server 106 receives an initial authorization request message, the authorization request comprising the transaction details, the authorization cryptogram and a DPAN.

The transaction processing server 106 may at this stage send the authorization request to the tokenization service provider 108 to retrieve the FPAN associated with the DPAN.

The transaction processing server 106 may access the credential selection server 105 to determine the PPAN associated with the FPAN or DPAN. Alternatively, the transaction processing server 106 may extract an encrypted PPAN from data included in the authorization message.

Step 306. The transaction processing server 106 sends an updated authorization request message based on the initial authorization request message to the preferred issuer (associated with the PPAN). The updated authorization request message may be the same as the initial authorization request message but having the PPAN in place of the DPAN. Because the authorization cryptogram was generated using the PPAN rather than the DPAN and using a cryptographic tool shared with the secondary issuer 104 of the PPAN, the updated authorization request message can be verified by the secondary issuer 104.

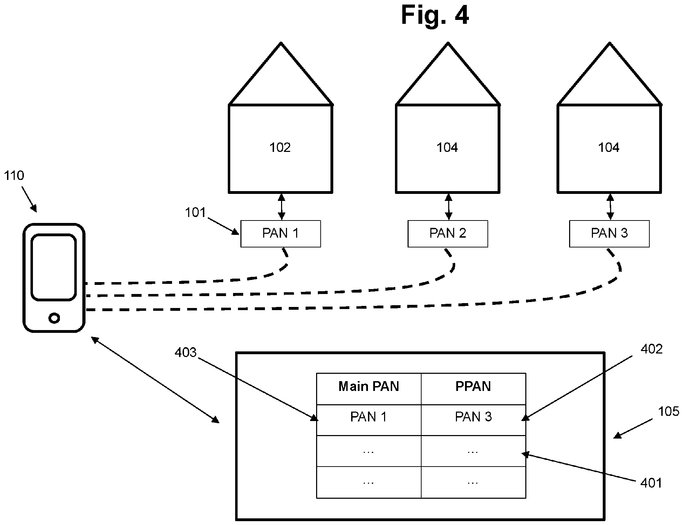

Figure 4 illustrates the relationship between the mobile communication device 110 and various payment credentials in an example embodiment suitable for use in the above methods.

A user holds accounts and associated payment cards at a number of issuers 102, 104. The user is able to use a first payment credential, the main PAN, associated with a first issuer 102, the main issuer, to initiate transactions in relation to any of the accounts, including accounts 104 that are associated with secondary issuers 104 that are not the main issuer.

Credential selection server 105 comprises a credential selection database 401, which indicates a preferred payment credential 402, PPAN, to be used during transactions initiated with the main PAN 403.

The user may use mobile communication device 110, specifically via an application installed on the mobile communication device 110, to contact the credential selection server 105 and request that credential selection database 401 is updated to reflect a choice of preferred payment credential 402 to be used in payments initiated with the main payment credential 403.

When the data processing server 106 of the payment network provider receives an authorization request comprising the main PAN, the data processing server 106 accesses the credential selection server 105 and determines which secondary credential 402 is indicated in the credential selection database 401 as being the preferred payment credential, PPAN.

The data processing server 106 replaces the main PAN with the PPAN in an updated authorization message for sending to the secondary issuer 104 associated with the PPAN.

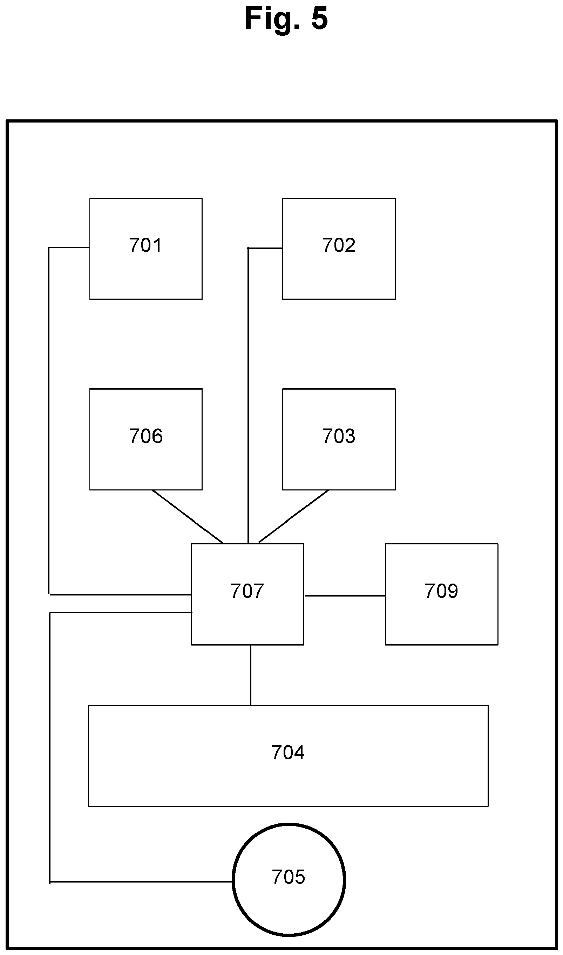

Fig. 5 shows an example of a mobile communication device 110 that is suitable for use in some embodiments of the disclosure. The skilled person will understand that various elements of the mobile communication device 110 may be replaced by similar functional elements or may not be necessary in every embodiment.

The mobile communication device 110 comprises a wireless antenna, e.g. a NFC antenna 702, that is capable of sending and receiving data from another compatible device.

The mobile communication device 110 further comprises a data communication element 703 that is capable of transmitting and receiving data wirelessly. The data communication element may be configured to enable 3G, 4G, 5G and/or WiFi data transfer.

The mobile communication device 110 further comprises a user interface 704 that may be used by a user to input data to the mobile communication device 110. The user input interface 704 may be a touchscreen and/or one or more physical buttons.

The mobile communication device 110 may further comprise a fingerprint reading element 705 capable of reading a user's fingerprint when placed on the element in order to authenticate the identity of the user.

The mobile communication device 110 further comprises memory 706 accessible by a processor 707 of the mobile communication device 110. The memory has stored thereon a mobile communication application allowing the user to access and modify the credential selection server 105 to update linked credential preferences.

The mobile communication device 110 further comprises a battery 709 providing power to the elements of the mobile communication device 110.

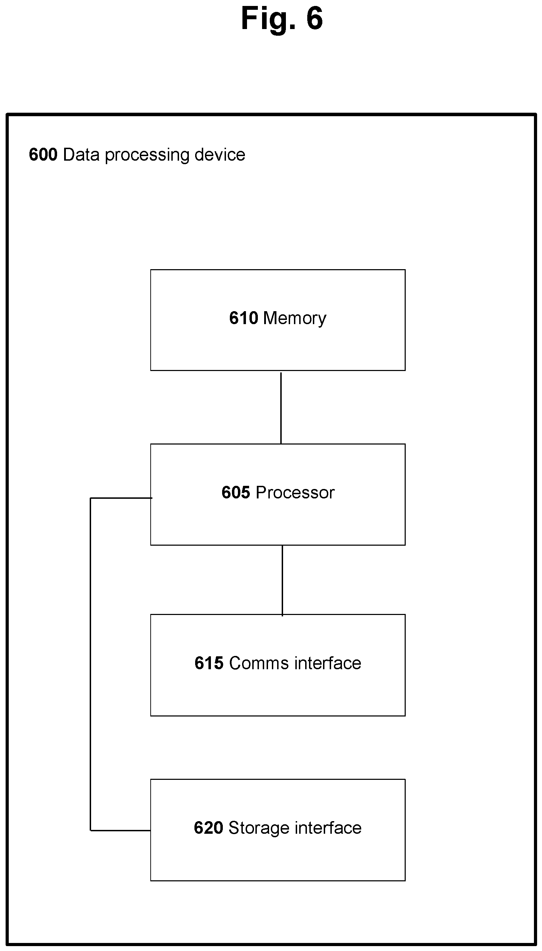

It will be apparent to a person skilled in the art that the methods described herein are all suitable for implementation by a data processing device. By way of example, Fig. 6 shows in schematic form a data processing device 600 that is suitable for performing the functions of data processing server 106, data mobile communication device 110, remote payment service 501, POS terminal 103, issuer selection server 105, or cloud based cryptographic server 201.

Data processing device 600 includes a processor 605 for executing instructions. Instructions may be stored in a memory 610, for example. Processor 605 may include one or more processing units (e.g., in a multi-core configuration) for executing instructions. The instructions may be executed within a variety of different operating systems on the data processing device 600, such as UNIX, LINUX, Microsoft Windows^{®}, etc. More specifically, the instructions may cause various data manipulations on data stored in memory 610 (e.g., create, read, update, and delete procedures). It should also be appreciated that upon initiation of a computer-implemented method, various instructions may be executed during initialization. Some operations may be required in order to perform one or more methods described herein, while other operations may be more general and/or specific to a particular programming language (e.g., C, C#, C++, Java, or other suitable programming languages, etc.).

Processor 605 is operatively coupled to a communication interface 615 such that data processing device 600 is capable of communicating with a remote device, such as another data processing device of the payment processing network.

Processor 605 may also be operatively coupled to a storage device such as storage medium 615 via storage interface 620. The storage device is any computer-operated hardware suitable for storing and/or retrieving data. In some cases, e.g. a remotely located storage medium, communication interface 615 may perform the function of storage interface 620 such that these two entities are combined.

The storage medium can be integrated in data processing device 600, or it can be external to data processing device 600 and located remotely. For example, data processing device 600 may include one or more hard disk drives as a storage device. Alternatively, where the storage device is external to data processing device 600, it can comprise multiple storage units such as hard disks or solid state disks in a redundant array of inexpensive disks (RAID) configuration. The storage device may include a storage area network (SAN) and/or a network attached storage (NAS) system.

Processor 605 can be operatively coupled to the storage device via a storage interface 620. Storage interface 620 is any component capable of providing processor 605 with access to the storage device. Storage interface 620 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 605 with access to the storage device.

Memory 610 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the disclosure has been described in terms of various specific embodiments, those skilled in the art will recognize that the disclosure can be practiced with modification within the spirit and scope of the claims.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof, wherein the technical effect is enabling sensitive data such a cryptogram to be distributed among secondary merchant data processing devices in a secure manner. Any such resulting program, having computer-readable code means, may be embodied or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1. A computer-implemented cryptographic authorization method performed at a server of a transaction processing system, comprising:
receiving, from a mobile communication device via a wireless data connection, a request for an authorization cryptogram associated with a preferred payment credential, PPAN, wherein the request for an authorization cryptogram comprises transaction details;
retrieving, from a secure cryptographic key storage element, a cryptographic key associated with an issuer associated with the PPAN;
generating, using the cryptographic key, an authorization cryptogram based on the transaction details;
sending, to the mobile communication device via the wireless data connection, the authorization cryptogram;
receiving an initial authorization request message, the initial authorization request message comprising the transaction details, the authorization cryptogram and a device credential token, DPAN;
sending, to an issuer associated with the PPAN, an updated authorization request message based on the initial authorization request message, wherein the updated authorization request message comprises the PPAN in place of the DPAN.

2. The method of claim 1, further comprising:
accessing a tokenization service and retrieving a main payment credential, FPAN, associated with the DPAN;
accessing a credential selection database and determining, based on a data indication in the credential selection database, that the PPAN should be used as the payment credential in transactions comprising the FPAN.

3. The method of any preceding claim, wherein the initial authorization request message comprises a data field containing an encrypted version of the PPAN.

4. The method of any preceding claim, wherein the request for an authorization cryptogram comprises one or more authentication credentials, wherein the one or more authentication credential comprises any combination of: a PIN entered into the mobile communication device, a password entered into the mobile communication device, biometric information provided into the mobile communication device and a device cryptogram generated using a cryptographic key associated with the device, and wherein the method further comprises:
verifying the identity of the user and/or the device based on the authentication credentials.

5. The method of any preceding claim, wherein the transaction details comprise data provided by a POS terminal during a contactless transaction and/or dynamic data generated by the mobile communication device during a transaction.

6. The method of any preceding claim, wherein the cryptographic key is an issuer master key associated with the issuer of the PPAN, and wherein generating the authorization cryptogram comprises: deriving a card master key based on the issuer master key and the PPAN, and deriving a session key from the card master key.

7. A computer-implemented cryptographic authorization method performed by a mobile communication device, the method comprising:
initiating processing of a payment transaction at a merchant point of sale, POS, terminal;
receiving transaction details from the merchant POS terminal via a wireless communication;
sending a request for an authorization cryptogram to a server of a transaction processing system via a wireless data connection, the request comprising the transaction details received from the merchant POS terminal;
receiving the authorization cryptogram from the server of the transaction processing server via a wireless data connection;
providing the authorization cryptogram and a device credential token associated with the mobile payment device to the merchant POS terminal via the wireless communication for inclusion in an authorization request message.

8. The method claim 7, wherein the request for the authorization cryptogram comprises further transaction details generated by the mobile communication device during the transaction, and wherein the method further comprises providing the further transaction details to the merchant POS terminal via the wireless communication.

9. The method of claim 7 or 8, further comprising:
requesting, from a tokenization service provider, a device credential token, DPAN, linked to a main payment credential, FPAN, provided to the tokenization service provider.

10. The method of claim 9, further comprising:
transmitting a request to a remote credential selection database, the request requesting that the credential selection database is updated to include an indication that either:
i) transactions associated with the FPAN should be directed towards an account associated with a preferred payment credential, PPAN; or
ii) one or more rules associated with a user of the mobile communication device should be modified, wherein the one or more rules are accessible by the credential selection database and the one or more rules enable the credential selection database to select a preferred payment credential, PPAN.

11. The method of any one of claims 7 to 10, wherein the further transaction details provided to the merchant POS terminal comprises a data field containing an encrypted version of the PPAN.

12. The method of any one of claims 7 to 11 further comprising:
receiving an authentication credential from a user, wherein the authentication credential comprises one of a PIN entered into the mobile communication device, a password entered into the mobile communication device, or biometric information provided into the mobile communication device.

13. A data processing server comprising a processor and a memory, the data processing server configured to perform the method of any one of claims 1 to 6.

14. A mobile communication device comprising a wireless communication element, a processor and a memory, the mobile communication device configured to perform the method of any one of claims 7 to 12.

15. A computer-readable storage medium comprising computer-executable instructions stored thereon which, when executed by a processor, cause the processor to perform the method of any one of claims 1 to 12.
